Europäisches Patentamt

European Patent Office

Office européen des brevets

(11) Numéro de publication: **0 383 708**
**A1**

## DEMANDE DE BREVET EUROPEEN

(21) Numéro de dépôt: **90450003.0**

(22) Date de dépôt: **12.02.90**

(51) Int. Cl.5: **A01G 1/04**

(30) Priorité: **13.02.89 FR 8902004**

(43) Date de publication de la demande:
**22.08.90 Bulletin 90/34**

(84) Etats contractants désignés:
**AT BE CH DE DK ES FR GB GR IT LI LU NL SE**

(71) Demandeur: **SOCIETE COOPERATIVE D'INTERET COLLECTIF AGRICOLE dite HARAGUY**
**Lur Berri**
**F-64120 Saint Palais(FR)**

(72) Inventeur: **Bascougnet, Bernard**
**Villa Biskareta, Behasque**
**F-64120 Saint Palais(FR)**

(74) Mandataire: **Thébault, Jean-Louis**
**Cabinet Thébault S.A. 50 Cours de Verdun**
**F-33000 Bordeaux(FR)**

(54) **Procédé de culture de champignons, machine et substrat pour sa mise en oeuvre.**

(57) - Le procédé consiste à extraire de rafles de maïs la partie tendre et légère, riche en cellulose, par décorticage et séparation, de façon à obtenir des particules d'une granulométrie inférieure au millimètre, à agglomérer par compression ces particules en bâtonnets, granules ou analogues, à réduire en farine lesdits bâtonnets ou granules et les humidifier par apport d'eau, de préférence chaude, à raison d'environ 65 à 75 % du volume de la farine de bâtonnets ou granules, ladite eau étant, préalablement à son injection, additionnée d'un agent d'alkylation et d'un agent sporulant, à mélanger intimement l'ensemble solide-liquide, puis à inoculer le mycélium, par lardage ou autre technique, au mélange ainsi obtenu, à conditionner en sacs le substrat ainsi ensemencé, à conserver les sacs à l'abri de la lumière et à une température de l'ordre de 25° C pendant une durée suffisante pour obtenir une colonisation complète du substrat et, enfin, à mettre en culture le substrat en plaçant les sacs dans une salle de culture appropriée et en pratiquant des ouvertures dans la paroi desdits sacs.

- Application en particulier à la culture des pleurotes.

# PROCEDE DE CULTURE DE CHAMPIGNONS, MACHINE ET SUBSTRAT POUR SA MISE EN OEUVRE

La présente invention a trait à la culture sur substrat de champignons et, plus précisément, de champignons saprophytes caractérisés par leur aptitude à utiliser directement la cellulose, tels que, par exemple, les pleurotes.

Les pleurotes sont des champignons "cellulosiques", c'est-à-dire capables de s'alimenter et de se développer sur tout support riche en cellulose.

Les substrats de culture actuellement utilisés pour ce type de champignons doivent subir des traitements longs et onéreux, car les pleurotes exigent à la fois une humidité élevée et un milieu désinfecté afin d'éliminer divers vecteurs ou agents de contamination.

Généralement on part de paille, de rafle de maïs ou d'écorces de feuillus.

Ce matériau est broyé, humidifié par trempage; égoutté, mélangé à divers additifs, par exemple du carbonate de chaux ou de la farine de plumes de poulets, puis "pasteurisé" par injection de vapeur d'eau.

Une fois toutes ces étapes effectuées, ce qui peut prendre facilement quatre à cinq jours, on procède à l'ensemencement à l'aide de mycélium de pleurote.

L'invention a pour but de proposer une nouvelle technique de culture, en particulier de pleurotes, mettant en oeuvre un substrat remarquable par ses propriétés physico-chimiques et par ses conditions, à la fois rapide, efficace et économique, d'obtention.

A cet effet, l'invention a pour objet un procédé de culture de champignons, à partir d'un substrat à base de rafles de maïs, inoculé, caractérisé en ce qu'il consiste à extraire des rafles de maïs la partie tendre et légère, riche en cellulose, par décorticage et séparation, de façon à obtenir des particules d'une granulométrie inférieure au millimètre, à agglomérer par compression ces particules en bâtonnets, granules ou analogues, à réduire en farine lesdits bâtonnets ou granules et les humidifier par apport d'eau, de préférence chaude, à raison d'environ 65 à 75 % du volume de la farine de bâtonnets ou granules, ladite eau étant, préalablement à son injection, additionnée d'un agent d'alkylation et d'un agent sporulant, à mélanger intimement l'ensemble solide-liquide, puis à inoculer le mycélium, par lardage ou autre technique, au mélange ainsi obtenu, à conditionner en sacs le substrat ainsi ensemencé, à conserver les sacs à l'abri de la lumière et à une température de l'ordre de 25° C pendant une durée suffisante pour obtenir une colonisation complète du substrat, et, enfin à mettre en culture le substrat en plaçant les sacs dans une salle de culture appropriée et en pratiquant des ouvertures dans la paroi desdits sacs.

L'invention a également pour objet le substrat obtenu conformément au procédé ci-dessus, ainsi qu'une machine spécialement conçue pour la fabrication de ce substrat.

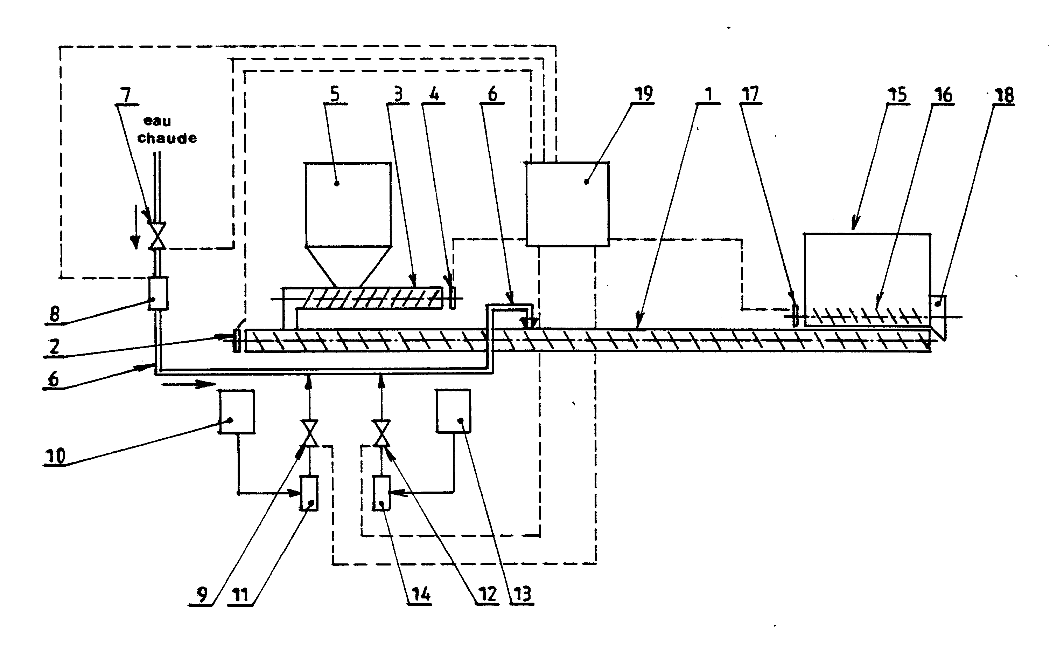

On va maintenant décrire plus en détail le procédé de l'invention en se reportant au dessin annexé dans lequel la figure unique illustre schématiquement un mode de réalisation d'une machine de fabrication du substrat selon l'invention.

Sur cette figure unique on a représenté en 1 une vis d'Archimède, d'expansion et mélange, disposée horizontalement et mue par un moyen moteur symbolisé en 2.

A son extrémité amont elle est reliée à une vis d'Archimède 3 de reprise, mue par un moyen moteur symbolisé en 4.

Cette vis 3 est chargée d'alimenter la vis 1 en bâtonnets ou granules stockés dans une trémie 5.

A environ un tiers de sa longueur à partir de la zone d'introduction des bâtonnets ou granules, la vis 1 est munie d'une entrée d'injection d'eau sur laquelle est piquée une canalisation 6 reliée à une source d'eau, de préférence chaude. Une électrovanne 7 et un compteur 8 sont installés sur la canalisation 6.

Des agents chimiques sont injectés dans l'eau de la canalisation 6 à l'aide d'une première électrovanne 9 reliée à une première réserve 10 de solution chimique par l'intermédiaire d'une pompe doseuse 11 et d'une seconde électrovanne 12 reliée à une seconde réserve 13 de solution chimique par l'intermédiaire d'une pompe doseuse 14.

A l'extrémité aval de la vis 1 est disposée une trémie 15 de stockage et distribution de mycélium, munie d'une vis d'Archimède 16 mue par un moyen moteur symbolisé en 17 et susceptible de déverser le mycélium dans le mélange de sortie de la vis 1 par une goulotte 18.

Enfin, on a symbolisé en 19 une armoire de commande-programmation de la machine reliée aux diverses électrovanne 7, 9, 12, aux moyens moteurs 2,4,17 et aux compteur 8 et pompes doseuses 11 et 14.

Le produit de départ est de la rafle de maïs dont on va récupérer, conformément à l'invention, seulement la partie molle ou légère qui est celle chargée le plus en cellulose.

A cet effet, on broie la raffle et on la sépare mécaniquement.

On effectue avantageusement plusieurs phases de broyage avec des appareils différents en terminant avec un broyeur à attrition, puis on fait une séparation par densité, par exemple dans une boîte à cascade ou un épurateur, afin de prélever les particules les plus légères. On obtient ainsi une sorte de farine constituée de particules inférieures au millimètre.

Après séparation on passe la farine à la presse afin d'obtenir des granules ou bâtonnets. A titre d'exemple on comprime fortement les particules avantageusement sous forme de bâtonnets cylindriques d'environ 8 à 10 mm de diamètre et 20 à 30 mm de longueur.

Au cours de ces divers traitements mécaniques (broyage-séparation-pressage) on détruit les acariens et les nématodes.

Ce sont ces bâtonnets ou granules qui sont stockés dans la trémie 5.

La machine illustrée par la figure unique fonctionne de la manière suivante.

Sous la commande de l'armoire 19, la vis 3 alimente de manière continue la vis 1 qui est elle-même entraînée en continu.

Les bâtonnets ou granules introduits dans la vis 1 sont brassés et réduits en une farine qui est mouillée au pourcentage désiré, variable selon le type de culture et de champignon, grâce à l'électrovanne 7 et au compteur 8.

L'eau, de préférence chaude, par exemple entre 45° et 50° C environ, est injectée par la canalisation 6 à raison d'environ 65 à 75 % du volume de la masse de farine transitant dans la vis 1. L'endroit où la canalisation 6 est piquée sur la vis 1 est à une distance de la zone d'introduction des bâtonnets ou granules suffisante pour que le brassage de la vis 1 réduise ces derniers en une masse farineuse au droit de l'injection d'eau. Cette proportion, déterminée par programmation, est contrôlée par un micro-processeur incorporé dans l'armoire 19 et qui agit en conséquence sur les débits des vis 1 et 3, et sur les électrovannes 7, 9 et 12.

L'eau chaude est préférable car elle opère une meilleure humidification, mais on peut éventuellement utiliser de l'eau froide.

Les additifs incorporés à l'eau injectée sont de deux types.

Il s'agit, d'une part, d'un agent d'alkylation, stocké dans la réserve 10 et, d'autre part, d'un agent sporulant, stocké dans la réserve 13.

L'agent d'alkylation, par exemple du formol, est chargé d'éliminer une partie de la flore bactérienne. Il tue en particulier les moisissures.

Le formol, dilué dans de l'eau à 30% environ, est injecté dans l'eau par la pompe 11 à raison d'environ 1000 ppm, ce dosage variant suivant les champignons.

L'agent sporulant, par exemple du carbendazol, est un produit fongique éliminant les spores. Son dosage dans l'eau est d'environ 120 ppm.

Les injections dans l'eau de la canalisation 6 des produits ci-dessus se fait de manière quasi-continue.

Après injection de l'eau ainsi additionnée dans la masse farineuse transitant dans la vis 1, l'ensemble solide-liquide est intimement mélangé et brassé et forme une farine humide. A cet effet, la distance entre l'endroit de la vis 1 où est piquée la canalisation 6 et l'extrémité de la vis où se fait l'ensemencement est d'environ six mètres.

Le lardage au droit de la goulotte 18 se fait suivant une technique connue consistant à enrober de mycélium des grains de sorgho et à déverser ces derniers, à raison d'environ 2 à 3 % en poids de celui du substrat, dans la masse de farine humide déversée régulièrement par la vis 1 et qui sort à une température de l'ordre de 30° C.

Pour assurer une bonne homogénéité de l'inoculation, la vis 16 est avantageusement asservie à la vis 1.

Le substrat ensemencé est ensaché en sacs plastiques microperforés de 3 à 3,5 Kg, à la manière connue. Le substrat est bien tassé dans les sacs qui sont refermés avec soin de manière à les rendre aussi étanches que possible.

Un tel substrat est remarquablement efficace pour la culture des champignons et tout particulièrement des pleurotes, grâce, d'une part, à sa forte teneur en cellulose et, d'autre part, à son excellente stérilisation, procurée à la fois par les opérations mécaniques de broyage-séparation-pressage et par les additifs chimiques, ladite stérilisation permettant de maintenir l'équilibre nécessaire à la fructification, l'élimination de la flore fongique, notamment le champignon TRICHODERMA VIRIDE, que craignent beaucoup les pleurotes, et le maintien de la couverture bactérienne. Le substrat répond en effet aux conditions prophylactiques très sévères qu'exige la culture des pleurotes.

La fabrication de ce substrat est par ailleurs beaucoup plus rapide, et donc économique, que celle des substrats actuels, cette fabrication pouvant être, comme l'illustre la machine de la figure unique, automatisée et effectuée en continu avec un débit important.

Les sacs renfermant le substrat inoculé sont placés pendant environ trois semaines dans un lieu non éclairé, à une température de l'ordre de 25° C. Au bout de ce délai, on peut observer une colonisation complète du milieu par le mycélium du champignon.

Le substrat s'est transformé en une masse blanche compacte que l'on peut manipuler comme un bloc.

On procède ensuite à la mise en culture dans une salle de culture dans les conditions appropriées de température, d'humidité et de ventilation, notamment en fonction du type de pleurote.

Les sacs sont placés dans cette salle de culture, les parois étant déchirées pour libérer la masse blanche compacte de substrat colonisé.

Enfin, l'invention n'est évidemment pas limitée au mode de mise en oeuvre représenté et décrit ci-dessus mais en couvre au contraire toutes les variantes aussi bien en ce qui concerne la nature et le dosage des agents chimiques de stérilisation, que les techniques de broyage-séparation-pressage et incorporation de l'eau et des additifs chimiques.

## Revendications

1. Procédé de culture de champignons, à partir d'un substrat à base de rafles de maïs, inoculé, caractérisé en ce qu'il consiste :
- à extraire des rafles de maïs la partie tendre et légère, riche en cellulose, par décorticage et séparation, de façon à obtenir des particules d'une granulométrie inférieure au millimètre,
- à agglomérer par compression ces particules en bâtonnets, granules ou analogues,
- à réduire en farine lesdits bâtonnets ou granules et les humidifier par apport d'eau, de préférence chaude, à raison d'environ 65 à 75 % du volume de la farine de bâtonnets ou granules, ladite eau étant, préalablement à son injection, additionnée d'un agent d'alkylation et d'un agent sporulant,
- à mélanger intimement l'ensemble solide-liquide, puis
- à inoculer le mycélium, par lardage ou autre technique, au mélange ainsi obtenu,
- à conditionner en sacs le substrat ainsi ensemencé,
- à conserver les sacs à l'abri de la lumière et à une température de l'ordre de 25°C pendant une durée suffisante pour obtenir une colonisation complète du substrat et, enfin,
- à mettre en culture le substrat en plaçant les sacs dans une salle de culture appropriée et en pratiquant des ouvertures dans la paroi desdits sacs.

2. Procédé suivant la revendication 1, caractérisé en ce que ledit agent d'alkylation est une solution aqueuse de formol à 30 % d'eau, injectée dans l'eau à raison de 1000 ppm environ.

3. Procédé suivant la revendication 1, caractérisé en ce que ledit agent sporulant est du carbendazol injecté dans l'eau à raison de 120 ppm environ.

4. Machine pour la mise en oeuvre du procédé selon l'une des revendications 1 à 3, destinée à la fabrication dudit substrat, caractérisée en ce qu'elle comprend :
- une vis d'Archimède (1) disposée horizontalement ;
- un moyen (3 à 5) de stockage des bâtonnets ou granules et de délivrance de ces derniers à l'extrémité amont de ladite vis (1) ;
- un circuit (6) d'injection d'eau entre l'extrémité amont de la vis (1) et l'extrémité de sortie, muni de moyens d'arrêt (7) et de comptage (8) ;
- un premier circuit d'injection dans ledit circuit d'eau (6) d'un premier additif, comprenant une réserve (10), une pompe (11) et une vanne (9) ;
- un second circuit d'injection dans ledit circuit d'eau (6) d'un second additif, comprenant une réserve (13), une pompe (14) et une vanne (12) ;
- un poste d'ensemencement (15 à 18) disposé à l'extrémité de sortie de la vis (1) ; et
- une armoire (19) de commande et programmation reliée aux différents organes à commander ou délivrant des informations utiles au processus de fonctionnement (2,4,7,8,9,12,17).

5. Substrat obtenu conformément au procédé selon l'une des revendications 1 à 3.

eau
chaude

EP 0 383 708 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-1445649 (CHAPUIS)<br>* le document en entier *<br>--- | 1 | A01G1/04 |
| A | US-A-3942969 (CARROLL)<br>* colonne 3, ligne 28 - colonne 5, ligne 37 *<br>--- | 1, 2 | |
| A | BE-A-904994 (COOPEX EXPORTARU)<br>* page 12, ligne 21 - page 1, ligne 13;<br>revendication 1; figure 1 *<br>--- | 1, 4 | |
| A | GB-A-2007077 (MACLENNAN)<br>* page 3, lignes 10 - 112 *<br>* page 5, lignes 81 - 113 *<br>----- | 1 | |

**DOMAINES TECHNIQUES RECHERCHES (Int. Cl.5 )**

A01G

Le présent rapport a été établi pour toutes les revendications

| Lieu de la recherche | Date d'achèvement de la recherche | Examinateur |
|---|---|---|
| LA HAYE | 08 MAI 1990 | HERYGERS J.J. |

EPO FORM 1503 03.82 (P0402)